# EUROPÄISCHE PATENTSCHRIFT

(11) **EP 0 976 958 B1**
(45) Veröffentlichungstag und Bekanntmachung des Hinweises auf die Patenterteilung: **29.10.2003**
(21) Anmeldenummer: 99114797.6
(22) Anmeldetag: 28.07.1999
(51) Int. Cl.: F16L 5/00, F16L 37/00, F16L 41/08, B23P 19/04, B25B 27/00, B21D 39/20, B21D 41/02

(54) **Montagehilfe für eine Befestigungsvorrichtung, insbesondere für Schlauch- oder Rohranschlüsse**
Assembly aid for a fastening device, in particular for hose and pipe couplings
Dispositif pour faciliter le montage d' un dispostif de fixation notamment pour raccords de tuyaux ou tubes

(30) Priorität: 29.07.1998 DE 19834003
(43) Veröffentlichungstag der Anmeldung: 02.02.2000
(73) Patentinhaber: Gerich, Adam, 74405 Gaildorf (DE)
(72) Erfinder: Gerich, Adam, 74405 Gaildorf (DE)
(74) Vertreter: Clemens, Gerhard, Dr.-Ing.

(56) Entgegenhaltungen:
- DE-A- 19 515 860
- DE-C- 519 535
- US-A- 4 733 551
- PATENT ABSTRACTS OF JAPAN vol. 008, no. 152 (M-309), 14. Juli 1984 (1984-07-14) & JP 59 047031 A (TOKYO SHIBAURA DENKI KK;OTHERS: 01), 16. März 1984 (1984-03-16)

## Beschreibung

### TECHNISCHES GEBIET

Die vorliegende Erfindung betrifft eine Montagehilfe für eine Befestigungsvorrichtung, insbesondere für Schlauchoder Rohranschlüsse, in einer Durchgangsausnehmung einer Wandung mit einer Innenseite und einer Außenseite, wobei die Befestigungseinrichtung eine von außen anzusetzende Grundkörpereinheit mit Vorsprungseinheit und Biegeeinheit und eine auf die Vorsprungseinheit von innen zu schiebende Verriegelungseinheit besitzt.

Derartige Befestigungsvorrichtungen werden in großer Stückzahl in der Industriefertigung eingesetzt. In vielen Anwendungsgebieten kommt es vor, daß Versorgungsleitungen gesammelt in einem Schlauch oder Rohr zu führen sind, um diese vor mechanischen Beschädigungen oder Witterungseinflüssen zu schützen. Häufig werden hierfür Wellenschläuche eingesetzt. Die Versorgungsleitungen laufen dabei, ausgehend von einer Schalteinheit, zu der jeweiligen Montageeinheit. Dabei treten die Versorgungsleitungen durch in der Wandung der Schalteinheit vorhandene Ausnehmungen aus. In diesem Bereich ist auch die Befestigungsvorrichtung an der Wand zu befestigen.

### STAND DER TECHNIK

Die bekannten Befestigungsvorrichtungen weisen ein Schraubgewinde auf, das durch die Durchgangsausnehmung gesteckt werden muß. Von der anderen Seite wird dann die Vorrichtung mit Schraubgewinde durch Aufschrauben einer entsprechenden Mutter an der Wandung fixiert. Dies erfordert zwangsläufig ein beidhändiges Arbeiten beziehungsweise es ist erforderlich, gegebenenfalls zwei Monteure einzusetzen. Eine derartige Montage ist relativ aufwendig.

Spezielle Montagehilfen, die für eine Befestigungsvorrichtung der eingangs genannten Art eingesetzt werden können, sind nicht bekannt.

Eine weitere Befestigungsvorrichtung ist aus der DE-A-19515860 bekannt.

### DARSTELLUNG DER ERFINDUNG

Der Erfindung liegt die Aufgabe beziehungsweise das technische Problem zugrunde, eine Montagehilfe für Befestigungsvorrichtungen der eingangs genannten Art anzugeben, die sowohl eine einfache und schnelle Montage erlaubt als auch eine sichere Befestigung der Befestigungsvorrichtung gewährleistet.

Die erfindungsgemäße Montagehilfe ist durch die Merkmale des unabhängigen Anspruchs 1 gegeben. Vorteilhafte Ausgestaltungen und Weiterbildungen sind Gegenstand der abhängigen Ansprüche.

Die erfindungsgemäße Montagehilfe ist demgemäß gekennzeichnet durch: Mittel zum Abstützen am Grundkörper, Mittel zum Herstellen eines Form- und/oder Kraftschlusses mit der Verriegelungseinheit und Mittel zum Verschieben der Mittel zum Herstellen eines Form- und/oder Kraftschlusses.

Dabei können die Mittel zum Verschieben der Verriegelungseinheit alternativ als mechanisches Hebelsystem oder pneumatisches oder hydraulisches oder elektrisches Verschiebesystem ausgebildet sein.

Eine besonders vorteilhafte Ausgestaltung zeichnet sich dadurch aus, daß die Mittel zum Herstellen des Formund/oder Kraftschlusses als Spreizkörper ausgebildet sind.

Eine hinsichtlich der Handhabung bei der Montage besonders bevorzugte Ausgestaltung der erfindungsgemäßen Montagehilfe zeichnet sich dadurch aus, daß das Schubelement innerhalb der Mittel zum Abstützen und am Dornkörper längsverschieblich geführt ist. Hinsichtlich eines einfachen konstruktiven Aufbaus hat es sich als günstig herausgestellt, den Dornkörper an den Mitteln zum Abstützen zu lagern.

Um eine dauerhaft zuverlässige Funktionalität und einen einfachen konstruktiven Aufbau zu gewährleisten, zeichnet sich eine bevorzugte Ausgestaltung der erfindungsgemäßen Montagehilfe dadurch aus, daß das Schubelement innerhalb der Mittel zum Abstützen und am Dornkörper längsverschieblich geführt ist.

Eine hinsichtlich einer wirtschaftlichen Herstellung der Montagehilfe besonders vorteilhafte Ausführungsform zeichnet sich dadurch aus, daß der Spreizkörper als zylindrischer Körper mit radial stirnseitig offenen Schlitzen und einem stirnrandseitig angeformten Vorsprung ausgebildet ist. Dabei kann der Vorsprung als umlaufend vorspringender Bund ausgebildet sein, der bei Betätigung der Montagehilfe - im in die Befestigungsvorrichtung eingesetzten Zustand - sich aufspreizt und infolge der Rückwärtsbewegung mit dem stirnseitig innenliegenden Rand des Entwicklungselements zur Anlage kommt und bei einer weiteren Rückwärtsbewegung das Verriegelungselement auf.die Vorsprungseinheit aufschiebt, wodurch dann die Biegeeinheiten verformt werden und eine sichere Befestigung der Befestigungseinrichtung an der Wandung gewährleistet wird.

Eine besonders vorteilhafte Weiterbildung, die eine Erleichterung bei der Montage mit sich bringt und den Einsatz der Montagehilfe bei Befestigungsvorrichtungen mit unterschiedlichem Durchmesser problemlos erlaubt, zeichnet sich dadurch aus, daß die Mittel zum Abstützen als kegelförmiger Abstützkörper mit kaskadenförmiger Mantelkontur ausgebildet sind.

Eine den Montageaufwand weiter reduzierende vorteilhafte Ausgestaltungsform zeichnet sich dadurch aus, daß bei an der Grundkörpereinheit der Befestigungseinheit abgestützten Mitteln zum Abstützen und bei nichtbetätigten Mitteln zum Verschieben die Mittel zum Herstellen des Form- und/oder Kraftschlusses eine solche Ausgangsposition einnehmen, daß der Form- und/oder Kraftschluß und die Verschiebung der Verriegelungseinheit lediglich durch eine Rückwärtsbewegung der Mittel zum Verschieben erfolgt.

Weiterhin ist es besonders vorteilhaft, die Montagehilfe derart auszugestalten, daß elastische Mittel, insbesondere ein Federelement, vorhanden sind, die auf die Mittel zum Verschieben einwirken, derart, daß sie der Rückwärtsbewegung entgegenwirken und nach Erreichen der Verriegelungsposition die Mittel zum Herstellen des Form- und/oder Kraftschlusses in einer Vorwärtsbewegung wieder in Ausgangsposition verbringen.

Eine derartige Montagehilfe muß diese lediglich mit ihrem Abstützkörper an dem Grundkörper der Befestigungsvorrichtung angesetzt werden. In dieser Position befindet sich der Spreizkörper bereits im Innern hinter der Verriegelungseinheit. Zum Verriegeln müssen lediglich die beiden Handgriffelemente zusammengedrückt werden. Dadurch spreizt sich der Spreizkörper auf, kommt mit der inneren Stirnseite der Verriegelungseinheit infolge Rückwärtsbewegung zur Anlage und verschiebt die Verriegelungseinheit infolge der weiteren Rückwärtsbewegung in ihre Verriegelungsposition. Ein Loslassen der Handgriffelemente bewirkt infolge des Federelements, daß der Spreizkörper wiederum in seine nicht gespreizte Ausgangsposition zurückfährt und die Montagehilfe in einfacher Art und Weise aus der Befestigungsvorrichtung herausgezogen werden kann.

Weitere Ausführungsformen und Vorteile der Erfindung ergeben sich durch die in den Ansprüchen ferner aufgeführten Merkmale sowie durch die nachstehend angegebenen Ausführungsbeispiele. Die Merkmale der Ansprüche können in beliebiger Weise miteinander kombiniert werden, insoweit sie sich nicht offensichtlich gegenseitig ausschließen.

### KURZE BESCHREIBUNG DER ZEICHNUNG

Die Erfindung sowie vorteilhafte Ausführungsformen und Weiterbildungen derselben werden im folgenden anhand der in der Zeichnung dargestellten Beispiele näher beschrieben und erläutert. Die der Beschreibung und der Zeichnung zu entnehmenden Merkmale können einzeln für sich oder zu mehreren in beliebiger Kombination erfindungsgemäß angewandt werden. Es zeigen:
- Fig. 1: teilweiser Schnitt und Ansicht einer Befestigungsvorrichtung mit einer an eine Grundkörpereinheit angeformten Aufnahmeeinheit für einen Wellenschlauch und einer Verriegelungseinheit in auseinandergezogener Position,
- Fig. 2: teilweiser Schnitt und Ansicht der Befestigungsvorrichtung gemäß Fig. 1 im in der Wandung befestigten Zustand und mit angeschlossenem Wellenschlauch,
- Fig. 3: schematische Teilschnitt- und Ansichtsdarstellung einer als Zangeneinheit ausgebildeten Montagehilfe für die Befestigungsvorrichtung gemäß den Figuren 1 und 2 und
- Fig. 4a-d: schematische Teilschnitt- und Ansichtsdarstellung der Anwendungsweise der Montagehilfe gemäß Fig. 3.

### WEGE ZUM AUSFÜHREN DER ERFINDUNG

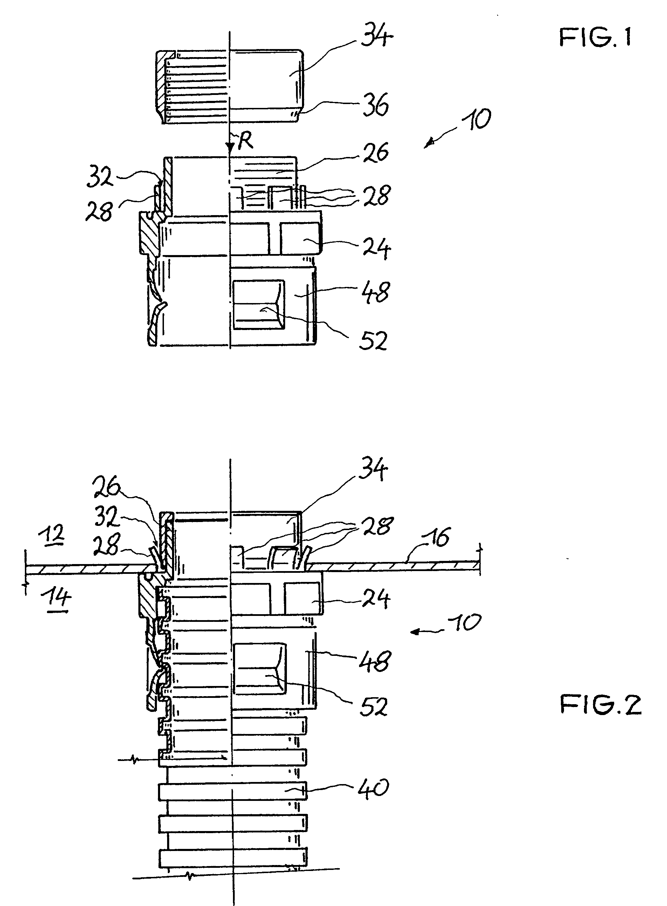

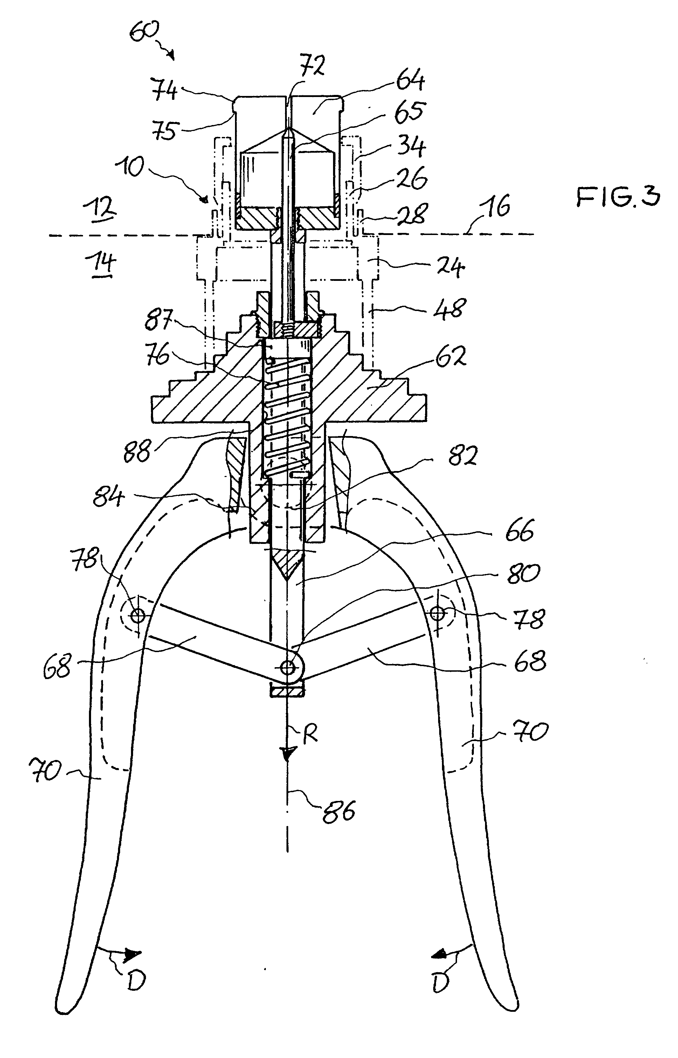

Die Figuren 1 und 2 zeigen eine Ausführungsvariante einer Befestigungsvorrichtung 10. Die Befestigungsvorrichtung 10 ist als rotationssymmetrisches Bauteil im Kunststoffspritzverfahren hergestellt. Sie weist eine Grundkörpereinheit 24 auf, an die eine in Fig. 1 nach oben weisende Vorsprungseinheit 26 angeformt ist, die als Rohreinheit 26 ausgebildet ist.

Relativ zur Rohreinheit 26 nach außen versetzt sind rastermäßig um den Umfang der Rohreinheit 26 herum angeordnete Biegeeinheiten 28 vorhanden, die als Lamellenelemente 28 ausgebildet sind. Durch das beabstandete Anordnen der Lamellenelemente 28 zu der Rohreinheit 26 entsteht zwischen beiden Bauteilen ein Schlitz 32. In Fig. 1 nach unten weisend ist an die Grundkörpereinheit 24 eine Aufnahmeeinheit 48, die insgesamt drei elastisch nach innen drückende Zungen 52 aufweist, wobei diese Aufnahmeeinheit 48 geeignet ist, einen Wellenschlauch 40 (siehe Fig. 2) anzuschließen.

In Fig. 1 und 2 ist eine Verriegelungseinheit 34 schematisch dargestellt, die als Verriegelungsring 34 ausgebildet ist. Die Verriegelungseinheit 34 weist in ihrem unteren Randbereich eine hohlkehlartige Abschrägung 36 mit einem vorgebbaren Radius auf, so daß in diesem Bereich eine Profilkontur vorhanden ist, die beim Aufstecken (Pfeil R in Fig. 1) der Verriegelungseinheit 34 eine gewisse "Verbördelung" der Lamellenelemente 28 bewirkt. Der Außendurchmesser des Verriegelungsrings 34 ist geringfügig kleiner als der Innendurchmesser einer Durchgangsausnehmung einer Wandung, an der die Befestigungsvorrichtung 10 befestigt werden soll. Dadurch läßt sich die Befestigungsvorrichtung 10 bei leicht aufgeschobenem Verriegelungsring 34 auf die Rohreinheit 26 von außen her in die Durchgangsausnehmung einführen.

Das Verfahren zum Befestigen der Befestigungsvorrichtung 10 an einer Wandung mit Durchgangsausnehmung wird mit einer erfindungsgemäßen Zangeneinrichtung 60 gemäß Fig. 3 beziehungsweise 4 durchgeführt.

Die Zangeneinrichtung 60 besitzt zwei über ein in Fig. 3 schematisch gestrichelt dargestelltes Gelenk 82 miteinander drehbar verbundene Handgriffelemente 70, die halbbügelartig ausgebildet sind und gemeinsam in etwa die Form eines "U" bilden. Die Handgriffelemente 70 stützen sich im Bereich des Gelenks 82 an eine Vorsprungseinheit 84 eines Abstützkörpers 62 ab, der oberseitig eine kegelförmige Außenkontur mit kaskadenförmig verlaufendem Mantelquerschnitt aufweist. Der Abstützkörper 62 ist rotationssymmetrisch um eine Achse 86 angeordnet und die Kaskadenstruktur ist auf die jeweiligen vorkommenden Durchmesser der Aufnahmeeinheit 48 der Befestigungsvorrichtungen 10 abgestimmt.

Der Abstützkörper 62 weist eine durchgehende Ausnehmung 88 auf, innerhalb derer ein Schubelement 66 längsverschieblich, das heißt in Richtung der Achse 86 geführt ist, wobei die Führungsflächen im oberen und unteren Randbereich des Abstützkörpers 62 angeordnet sind. Innerhalb des Abstützkörpers 62 ist der Durchmesser der Ausnehmung 88 etwas vergrößert und in diesem Bereich ist eine Spiralfeder 76 vorhanden, die sich unterseitig an dem Abstützkörper 62 und oberseitig an einem Anschlag 87 des Schubelements 66 anliegt.

Im oberen Bereich des Abstützkörpers 62 ist ein stabförmiger, in der Achse 86 angeordneter Dornkörper 65 vorhanden, der bereichsweise innerhalb des Schubelements 66 verläuft. Am oberen Ende des Schubelements 66 ist ein Spreizkörper 64 angeschlossen, der als zylindrisches Bauteil ausgebildet ist, dessen maximaler Außendurchmesser geringfügig kleiner ist als der maximale Innendurchmesser der Befestigungsvorrichtung 10. Von der oberen Stirnseite des Spreizkörpers 64 her sind radial verlaufende Schlitze 72 eingeformt, wobei die Spitze des Dornkörpers 65 im Mittelpunkt der Schlitze 72 angreift. Am seitlichen oberen Stirnrandbereich des Spreizkörpers 64 ist ein Vorsprung 74 umlaufend angeformt, der unterseitig eine Anschlagfläche 75 aufweist, die beim Montagevorgang mit der oberen Stirnseite der Verriegelungseinheit 34 in Kontakt kommt.

Das längsverschieblich, entlang der Achse 86 gelagerte Schubelement besitzt im unteren Endbereich ein auf der Achse 86 liegendes Gelenk 80, an das jeweils ein Kniehebelelement 68 gelenkig angeschlossen ist, welches Kniehebelelement 68 wiederum selbst an dem linken beziehungsweise rechten Handgriffelement 70 über ein Gelenk 78 an das jeweilige Handgriffelement 70 gelenkig angeschlossen ist. Die Kniehebelelemente 68 weisen hierbei in der Ausgangsposition, das heißt im nichtbetätigten Zustand der Zangeneinrichtung 60, eine von den Gelenken 78 ausgehend nach unten verlaufende Neigung zum gemeinsamen Gelenk 80 hin auf.

Über diese Kniehebelgelenke 68 wird bei Betätigung der Zangeneinrichtung 60 das Schubelement 66 in der Pfeilrichtung R entlang seiner Achse 86 nach rückwärts verschoben.

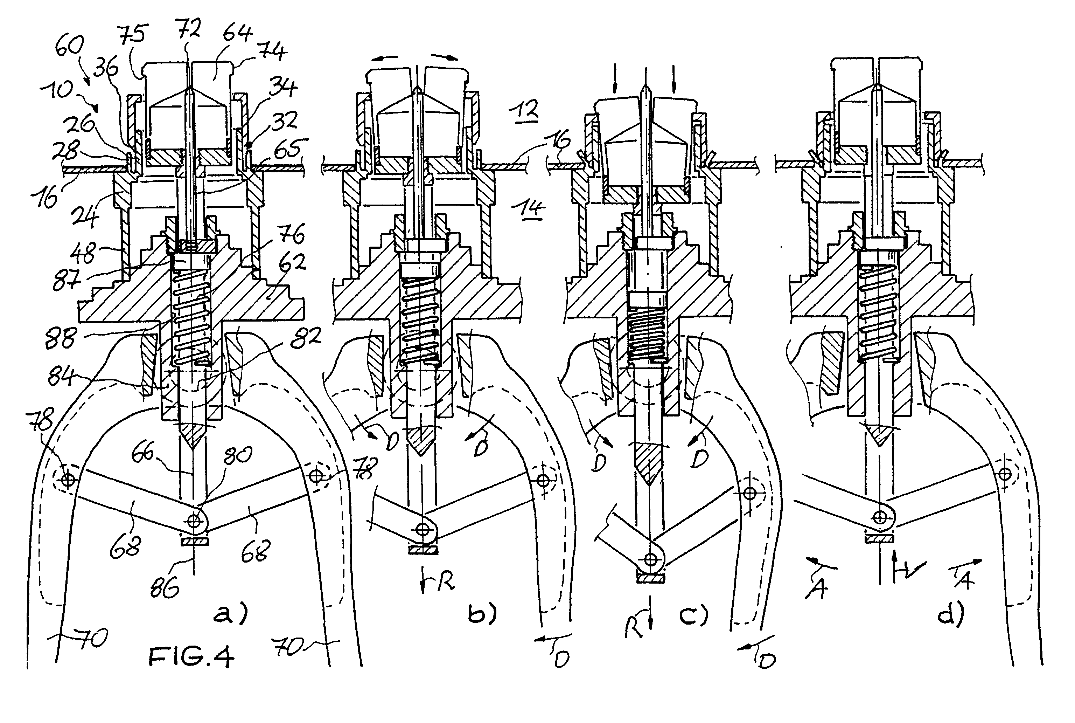

Die Befestigung der Befestigungsvorrichtung 10 in der Ausnehmung der Wandung 16 mit Hilfe der Zangeneinrichtung 60 wird im folgenden anhand der Figuren 4a bis d beschrieben. Zunächst wird die Zangeneinrichtung 60 gemäß Fig. 4a bis zum Anschlag an der Aufnahmeeinheit 48 der Befestigungsvorrichtung 10 an dem Abstützkörper 62 in die Befestigungsvorrichtung 10 eingeführt. Die Länge des Schubelements 66 mit im oberen Endbereich angeordnetem Spreizkörper 64 ist dabei so bemessen, daß der Vorsprung 74 des Spreizkörpers 64 im Bereich der Innenseite 12 hinter der oberen Stirnseite der Verriegelungseinheit 34 angeordnet ist. Im nächsten Schritt werden die Handgriffelemente 70 betätigt (Fig. 4b, Pfeil D), wodurch das Schubelement 66 aufgrund der gelenkigen Verbindung der Kniehebelelemente 68 mit den Handgriffelementen 70 die Rückwärtsbewegung R durchführt, die gleichzeitig auf den Spreizkörper 64 übertragen wird. Infolge der Rückwärtsbewegung R dringt der Dornkörper 65 in das Zentrum der Schlitze 72 ein und bewirkt eine Aufweitung des Spreizkörpers 64 dahingehend, daß die Anlagefläche 75 an der oberen Stirnseite des Verriegelungselements 34 zur Anlage kommt. Bei weiterer Betätigung der Handgriffelemente 70 (Fig. 4c) wird nunmehr das Verriegelungselement 34 weiter in Richtung R auf der Vorsprungseinheit 26 der Befestigungsvorrichtung 10 bewegt, wodurch das Verriegelungselement 34 in den Schlitz 32 zwischen der Vorsprungseinheit 26 und den Biegeeinheiten 28 gedrückt wird. Dadurch verformen sich die Biegeeinheiten 28 nach außen, wodurch eine sichere Befestigung der Befestigungsvorrichtung 10 an der Wandung 16 gewährleistet wird. Sobald die Verriegelungsposition (Fig. 4c) erreicht ist, gibt die Montageperson die Handgriffelemente 70 frei, so daß infolge der Einwirkung des Federelements 76 das Schubelement 66 und damit der Spreizkörper 64 eine entgegen der Rückwärtsbewegung R verlaufende Vorwärtsbewegung V durchführt und sich die Handgriffelemente 70 aufweiten (Pfeil A) bis hin zur ursprünglichen Ausgangsposition, in dem der Anschlag 87 an seine Begrenzung anschlägt. In dieser Position (Fig. 4d) befindet sich der Spreizkörper 64 in einem nicht gespreizten Zustand und die gesamte Zangeneinrichtung 60 kann problemlos aus der Befestigungsvorrichtung 10 herausgezogen werden.

Die dargestellte Ausführungsform stellt eine Möglichkeit der Umsetzung der oben beschriebenen Erfindung dar. Neben einem mechanischen Hebelsystem können auch Systeme zum Einsatz kommen, bei denen beispielsweise die Verschiebung des Schubelements oder die Spreizung des Spreizkörpers auf pneumatischen oder hydraulischen oder elektrischen Systemen beruht.

## Patentansprüche

1. Montagehilfe (60) für eine Befestigungsvorrichtung (10), insbesondere für Schlauch- oder Rohranschlüsse, in einer Durchgangsausnehmung einer Wandung (16) mit einer Innenseite (12) und einer Außenseite (14), wobei die Befestigungseinrichtung (10) eine von außen anzusetzende Grundkörpereinheit (24) mit Vorsprungseinheit (26) und Biegeeinheit (28) und eine auf die Vorsprungseinheit (26) von innen zu schiebende Verriegelungseinheit (34) besitzt,
**gekennzeichnet durch**
- Mittel (62) zum Abstützen am Grundkörper,
- Mittel (64, 65) zum Herstellen eines Form- und/oder Kraftschlusses mit der Verriegelungseinheit (34) und
- Mittel (66, 68, 70) zum Verschieben der Mittel (64) zum Herstellen eines Form- und/oder Kraftschlusses.

2. Montagehilfe nach Anspruch 1,
**dadurch gekennzeichnet, daß**
die Mittel (66, 68, 70) zum Verschieben der Verriegelungseinheit (34) als mechanisches Hebelsystem oder pneumatisches oder hydraulisches oder elektrisches Verschiebesystem ausgebildet sind.

3. Montagehilfe nach Anspruch 1,
**dadurch gekennzeichnet, daß**
die Mittel (64, 65) zum Herstellen des Form- und/oder Kraftschlusses als Spreizkörper (64) ausgebildet sind.

4. Montagehilfe nach einem oder mehreren der vorstehenden Ansprüche,
**dadurch gekennzeichnet, daß**
die Montagehilfe (60) als Zangeneinrichtung (60) ausgebildet ist, die zwei über ein Gelenk verbundene Handgriffelemente (70) besitzt, an die Handgriffelemente (70) über zwei Kniehebelelemente (68) ein längsverschiebliches Schubelement (66) angeschlossen ist, an dessen vorderem Endbereich ein Spreizkörper (64) angeschlossen ist und ein relativ zum Schubelement (66) ortsfester Dornkörper (65) vorhanden ist, der beim Rückwärtsverschieben (R) des Schubelements (66) mit Spreizkörper (64) infolge Betätigung der Handgriffelemente (70) den Spreizkörper (64) aufspreizt.

5. Montagehilfe nach Anspruch 4,
**dadurch gekennzeichnet, daß**
der Dornkörper (65) an den Mitteln (62) zum Abstützen gelagert ist.

6. Montagehilfe nach Anspruch 4 und/oder 5,
**dadurch gekennzeichnet, daß**
das Schubelement (66) innerhalb der Mittel (62) zum Abstützen und am Dornkörper (65) längsverschieblich geführt ist.

7. Montagehilfe nach einem oder mehreren der Ansprüche 3 bis 6,
**dadurch gekennzeichnet, daß**
der Spreizkörper (64) als zylindrischer Körper mit radial stirnseitig offenen Schlitzen (72) und einem stirnrandseitig angeformten Vorsprung (74) ausgebildet ist.

8. Montagehilfe nach Anspruch 7,
**dadurch gekennzeichnet, daß**
der Vorsprung (74) als umlaufend vorspringender Bund ausgebildet ist.

9. Montagehilfe nach einem oder mehreren der vorstehenden Ansprüche,
**dadurch gekennzeichnet, daß**
die Mittel zum Abstützen als kegelförmiger Abstützkörper (62) mit kaskadenförmiger Mantelkontur ausgebildet sind.

10. Montagehilfe nach einem oder mehreren der vorstehenden Ansprüche,
**dadurch gekennzeichnet, daß**
bei an der Grundkörpereinheit (24) der Befestigungseinheit (10) abgestützten Mitteln (62) zum Abstützen und
bei nichtbetätigten Mitteln (66, 68, 70) zum Verschieben die Mittel (64, 65) zum Herstellen des Form- und/oder Kraftschlusses eine solche Ausgangsposition einnehmen, daß der Form- und/oder Kraftschluß und die Verschiebung der Verriegelungseinheit (34) lediglich durch eine Rückwärtsbewegung (R) der Mittel (66) zum Verschieben erfolgt.

11. Montagehilfe nach einem oder mehreren der vorstehenden Ansprüche,
**dadurch gekennzeichnet, daß** elastische Mittel, insbesondere ein Federelement, vorhanden sind, die auf die Mittel (66, 68, 70) zum Verschieben einwirken, derart, daß sie der Rückwärtsbewegung (R) entgegenwirken und nach Erreichen der Verriegelungsposition die Mittel zum Herstellen des Formund/oder Kraftschlusses in einer Vorwärtsbewegung (V) wieder in Ausgangsposition verbringen.

## Claims

1. Assembly aid (60) for a fastening device (10), in particular for hose or pipe connections, in a passage recess of a wall (16) having an inner side (12) and an outer side (14), the fastening device (10) having a main body unit (24) which is to be fitted on from the outside and has a projection unit (26) and bending unit (28), and a locking unit (34) which is to be pushed from the inside onto the projection unit (26),
**characterized by**
- means (62) for supporting on the main body,
- means (64, 65) for producing a form-fitting and/or frictional connection to the locking unit (34), and
- means (66, 68, 70) for displacement of the means (64) for producing a form-fitting and/or frictional connection.

2. Assembly aid according to Claim 1, **characterized in that** the means (66, 68, 70) for displacement of the locking unit (34) are designed as a mechanical lever system or a pneumatic or hydraulic or electrical displacement system.

3. Assembly aid according to Claim 1, **characterized in that** the means (64, 65) for producing the form-fitting and/or frictional connection are designed as expanding bodies (64).

4. Assembly aid according to one or more of the preceding claims, **characterized in that** the assembly aid (60) is designed as a tongs device (60) which has two handle elements (70) which are connected via a joint and to which a longitudinally displaceable thrust element (66) is connected via two toggle lever elements (68), an expanding body (64) being connected to the front end region of the said thrust element and there being a spike body (65) which is positionally fixed relative to the thrust element (66) and which, when the thrust element (66) is displaced backwards (R) by the expanding body (64) as a consequence of actuation of the handle elements (70), expands the expanding body (64).

5. Assembly aid according to Claim 4, **characterized in that** the spike body (65) is mounted on the supporting means (62).

6. Assembly aid according to Claim 4 and/or 5, **characterized in that** the thrust element (66) is guided in a longitudinally displaceable manner within the supporting means (62) and on the spike body (65).

7. Assembly aid according to one or more of Claims 3 to 6, **characterized in that** the expanding body (64) is designed as a cylindrical body with slots (72) which are open radially on the end side and a projection (74) which is integrally formed on the end edge.

8. Assembly aid according to Claim 7, **characterized in that** the projection (74) is designed as a collar which projects in an encircling manner.

9. Assembly aid according to one or more of the preceding claims, **characterized in that** the supporting means are designed as a conical supporting body (62) having a cascade-shaped lateral-surface contour.

10. Assembly aid according to one or more of the preceding claims, **characterized in that**, in the case of supporting means (62) which are supported on the main body unit (24) of the fastening unit (10) and in the case of non-actuated displacement means (66, 68, 70), the means (64, 65) for producing the form-fitting and/or frictional connection take up such a starting position that the form-fitting and/or frictional connection and the displacement of the locking unit (34) take place merely by means of a movement backwards (R) of the displacement means (66).

11. Assembly aid according to one or more of the preceding claims, **characterized in that** there are elastic means, in particular a spring element, which act on the displacement means (66, 68, 70) in such a manner that they counteract the movement backwards (R) and, after reaching the locking position, bring the means for producing the form-fitting and/or frictional connection back in a forwards movement (V) into the starting position.

## Revendications

1. Dispositif pour faciliter le montage (60) d'un dispositif de fixation (10) notamment pour raccords de tuyaux ou de tubes, dans un vide de passage d'une cloison (16) avec une paroi intérieure (12) et une paroi extérieure (14), dans lequel le dispositif de fixation (10) comporte une unité de corps de base (24) à mettre en place par l'extérieur avec un élément faisant saillie (26) et une unité cintrée (28) et une unité de verrouillage (34) à appliquer de l'intérieur sur l'élément faisant saillie (26),
**caractérisé par**
- un moyen (62) de contre-butée sur le corps de base,
- des moyens (64, 65) pour la réalisation d'un joint ou connexion par rapprochement de formes conjuguées et / ou d'une adhérence avec l'unité de verrouillage (34) et
- des moyens (66, 68, 70) pour déplacer le moyen (64) afin de réaliser un joint par rapprochement de formes conjuguées et / ou une adhérence.

2. Dispositif pour faciliter le montage selon la revendication 1,
**caractérisé en ce que** les moyens (66, 68, 70) pour le déplacement de l'unité de verrouillage (34) sont formés d'un système de levage mécanique ou pneumatique ou hydraulique ou d'un système de manoeuvre électrique.

3. Dispositif pour faciliter le montage selon la revendication 1,
**caractérisé en ce que** les moyens (64, 65) pour la réalisation du joint par rapprochement et / ou de l'adhérence avec l'unité de verrouillage (34) sont formés d'un corps expansible.

4. Dispositif pour faciliter le montage selon l'une ou plusieurs des précédentes revendications,
**caractérisé en ce que** le dispositif pour faciliter le montage (60) est formé d'un dispositif à pinces (60) qui comporte deux poignées de commande manuelle (70), reliées par une articulation, poignées sur lesquelles est connecté, au moyen de deux éléments coudés ou à genouillère (68), un élément de poussée (66) se déplaçant longitudinalement, sur lequel un corps extensible ou expansible (64) est connecté sur l'extrémité avant et qui comporte, solidement fixé par rapport à l'élément de poussée (66), un corps de mandrin (65) lequel détend le corps extensible ou expansible (64), lors de la poussée arrière (R) de l'élément de poussée (66) avec le corps extensible ou expansible (64) à la suite de la manoeuvre des poignées de commande manuelle (70).

5. Dispositif pour faciliter le montage selon la revendication 4,
**caractérisé en ce que** le corps du mandrin (65) est placé sur les moyens (62) destinés à la contrebutée.

6. Dispositif pour faciliter le montage selon la revendication 4 et / ou la revendication 5,
**caractérisé en ce que** l'élément de poussée (66) est guidé à l'intérieur des moyens (62) destinés à la contrebutée et est guidé longitudinalement sur le corps de mandrin (65).

7. Dispositif pour faciliter le montage selon une ou plusieurs des revendications 3 à 6,
**caractérisé en ce que** le corps extensible ou expansible (64) a la forme d'un corps cylindrique comportant des rainures radiales (72) ouvertes sur la face avant et une saillie (74) formée sur la face avant.

8. Dispositif pour faciliter le montage selon la revendication 7,
**caractérisé en ce que** la saillie (74) est formée d'une bride faisant saillie tout autour.

9. Dispositif pour faciliter le montage selon l'une ou plusieurs des précédentes revendications,
**caractérisé en ce que** les moyens pour la contrebutée sont formés d'un corps de contrebutée (62) de forme conique avec un contour d'enveloppe en forme dégradée.

10. Dispositif pour faciliter le montage selon l'une ou plusieurs des précédentes revendications,
**caractérisé par** la présence sur l'unité de corps de base (24) du dispositif de fixation (10) des moyens de contrebutée (62) pour la contrebutée et en ce que sur les moyens (66, 68, 70) non activés pour le déplacement (64, 65), les moyens pour la réalisation d'un joint par rapprochement et / ou d'une adhérence avec l'unité de verrouillage occupent une position de sortie telle que le joint par rapprochement et / ou l'adhérence ainsi que le déplacement de l'unité de verrouillage (34) s'effectue uniquement au moyen d'un mouvement arrière (R) des moyens pour le déplacement (66).

11. Dispositif pour faciliter le montage selon l'une ou plusieurs des précédentes revendications,
**caractérisé en ce que** des moyens élastiques sont présents, tout particulièrement, un élément à ressort, lesquels exercent une action sur les moyens pour le déplacement (66, 68, 70) de telle sorte qu'ils exercent une action opposée au mouvement arrière (R) et qu'une fois atteinte la position de verrouillage, les moyens pour la réalisation d'un joint par rapprochement et / ou d'une adhérence, sont par un mouvement avant (V) placés à nouveau en position initiale.
